# EUROPEAN PATENT APPLICATION

(11) **EP 0 843 491 A2**
(43) Date of publication of application: **20.05.1998**
(21) Application number: 97830545.6
(22) Date of filing: 24.10.1997
(51) Int. Cl.: H04Q 7/00, H04M 1/72

(54) **A device for interfacing the mobile or the fixed telephone network**

(30) Priority: 28.10.1996 IT RM960733
(71) Applicant: Telecom Italia S.p.A., 00196 Roma (IT)
(72) Inventor: Gentili, Gino, 00148 Roma (IT)
(74) Representative: Fiammenghi-Domenighetti, Delfina

(57) **Abstract**

A device for carrying out the management of an interface service between the mobile telephone network and the fixed telephone network on a physical line, provides for the transfer of the active communication from the mobile telephone network to the fixed plant of the fixed telephone network and vice versa. The user can distinguish from which telephone network the telephone call is coming, and he can perform outgoing calls by choosing one of the networks.

## Description

The invention generally relates to telephone services provided to the user both from the national manager of the fixed plants and from the different companies of the mobile telephony service and specifically it relates to an interfacing system between the cellular telephone service and the fixed plant telephone service on a physical line (wherein the so-called cordless telephones are included, which in fact represent only the mobile telephone terminal of a telephone network where the signal transmission occurs anyway on a physical line).

Some typical drawbacks for the user of a cellular phone, when he is at home or at work or in any case in a localized environment are already known. Besides the annoying task for the user of always being forced to carry a weight, there exists also the problem of a reduced signal reception from the cellular phone in the most internal regions of a building.

Moreover, the wide spread of cellular phones has produced the effect that many owners of a second house with relative fixed plants have cancelled the contracts for this service, relying only on the use of cellular phones. This has however involved the possible and usual problem of a reduced signal reception and on the other hand it makes in fact useless a valid plant which is connected to the telephone exchange and which is always functionally usable. Another kind of problem is that till now the biomedical effects of the electromagnetic field produced by the received and the transmitted signals during a telephone conversation with a cellular phone are not clearly defined; in any case, the possibility of transferring the wireless telephone communication, to the fixed line plant of a building, would certainly allow to eliminate or at least to reduce said drawback.

It is however a remarkable fact that, even if in this context this is considered as an ultimate possibility, in a foreseeable future the improvements in the technology of wireless telephone reception and transmission will lead to a wider spread of the mobile telephony with respect to the cable transmission telephony (whose drawbacks due to the maintenance and installation costs are obvious) ; in such a situation the technologies for managing the interfacing of the cellular phone telephony service and the fixed plant telephony service on a fixed line, and the devices employed to carry out these methods, will play a fundamental technical role in defining the steps of this possible transition, both under the economical point of view and simply, and under the point of view of the evolution of telephone networks themselves.

An object of the present invention is to provide an interface device between the mobile telephone service and the fixed line plant telephone service on fixed telephone network, and also the relative functional procedures suited to transfer on the network comprising the physical line, the transmission signal coming from a wireless transmission channel and vice versa, both in case of a channel supported by a repeater or by a minimum orbital satellite or any other kind of transmission means.

Another object of the present invention is to provide an interface device between the cellular phone service and the fixed plant telephone service on the line of the fixed telephone service, and the associated functional procedures, which absolutely do not invalidate the known functionality of the telephone network on the fixed line (fax service, telephone answering system, modem and personal computer, etc.), wherein said interfacing technique will increase - by introducing a new service - telephone network on an already existing fixed line. A further object of the present invention is to provide an interface device between the cellular phone service and the fixed plant telephone service on the line of the fixed telephone network, and moreover, to provide the associated functional procedures, allowing the immediate identification by the user of the received telephone call, wherein the user is able to distinguish whether the telephone call is directed to the telephone number of the cellular phone or to the number of the telephone network on the fixed line.

Another object of the present invention is to provide an interface system between the cellular phone service and the fixed plant telephone service on a physical line, which employs standard technologies and constitutive parts in the technical field of telephone communications, in order to provide a low cost and easy maintenance interface device. These and other objects which will clearly result from the description are attained by an interface device between the mobile telephone service and the fixed plant telephone service on a physical line, comprising (hardware and relative software) means in order to transfer on the fixed plant of the local physical line, the active telephone communication which is established on the mobile telephone network, in such a way that in the presence of an incoming call, both from a fixed physical line coming from the telephone exchange or from the mobile telephone network through at least a cellular phone, according to the state of the fixed plant on physical line concerned, provides for the management of the engagement of the latter if this line is free, or if the latter is engaged, for the waiting or the insertion on the line - through the hung up of the conversation with the called user - according to a dedicated service protocol; further with respect to the fixed plant on a local line, said interface is provided with a switching function for routing the outgoing telephone call either to the telephone exchange, through the fixed telephone network line, or to the mobile telephone network, through the interfaced cellular phone.

Only for illustrative purposes and without limiting in this way the possible applications and the generality of the invention, in the following a preferred embodiment of the invention will be described, with reference to the accompanying drawings, in which:
Fig. 1 is a general schematic view showing how the interfacing is obtained according to the method of the present invention;
Fig. 2 is a schematic representation of the practical realization of the interface device itself according to the present invention.
Fig. 3 is a block diagram concerning the sequenzialization of processes involved in operating the device according to the present invention;
Fig. 4 is a functional diagram representing the operative protocol in the presence of an incoming telephone call; and
Fig. 5 is a functional diagram representing the operative protocol in the presence of an outgoing telephone call.

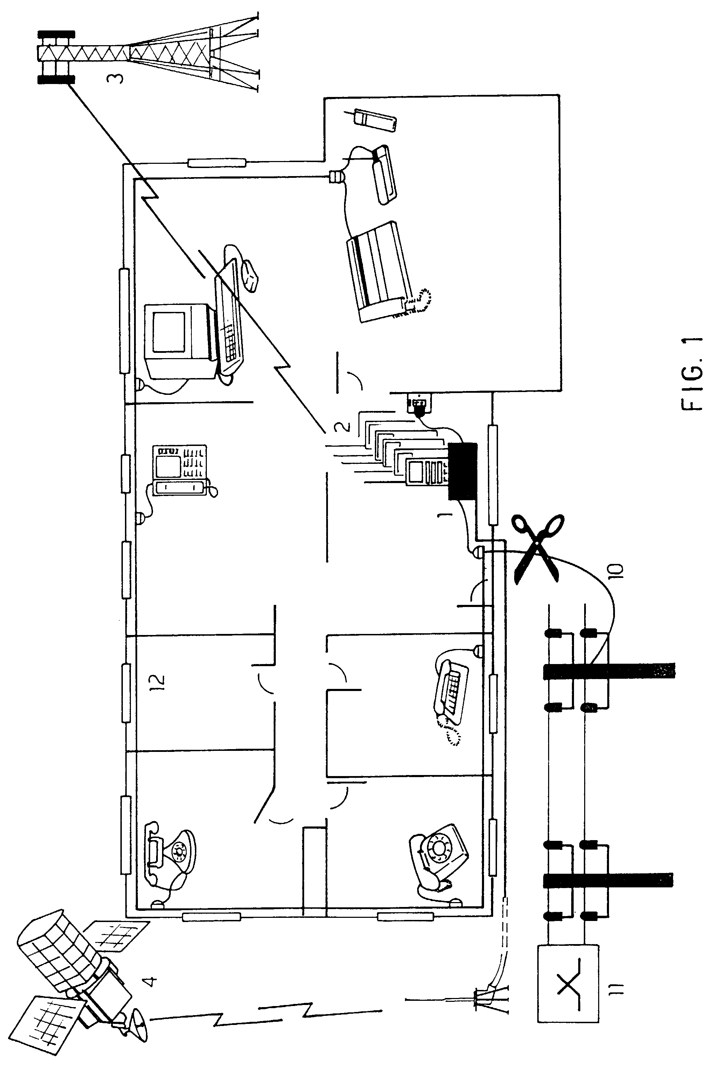

In Fig. 1 there is shown the plan of a hypothetical house or working environment, wherein a multiplicity of apparatuses are put in evidence (telephone exchange, extensions thereof, telefax, personal computer and its associated modem, cordless telephone, etc.), which form extensions of the fixed line circuit 12 which is connected through the physical cable of the local line 10 to the main telephone exchange 11.

The device 1 according to the present invention is suited to interface itself to the cellular phone 2, by means of which it can be involved in the telephone calls transmitted from the repeaters 3 or the minimum orbital satellites 4. From the schematic representation it obviously follows that it is possible to use the cellular phone 2 at any point whatever of the conventional fixed line plant 12, and at the same time it is possible to use the fixed line plant 12 according to the modalities and with all the usually employed accessories, such as cordless telephones, fax, telephone answering system, personal computer and modem thereof, etc., which can be provided and operate along with a conventional fixed network.

According to this arrangement it is also evident that the reuse of localized fixed plants whose use was stopped in favour of mobile telephone apparatuses, will be convenient. At the same time, the use of an external aerial antenna for signal amplification coming from a satellite 4 or a repeater 3, finds an immediate and effective application.

Moreover the cellular phone 2 arranged so as to be interfaced with the device 1, can also be connected to a dedicated battery-charger.

The fact that telephone communications are substantially transferred onto the localized fixed plant and its extensions (all apparatus connected thereto), implies obviously that the user will no more be subject to the electromagnetic fields associated to the received and transmitted signals; besides their intrinsic danger, whose seriousness has not been fully proved yet, they anyway influence a very delicate part of the human body during an usual telephone conversation.

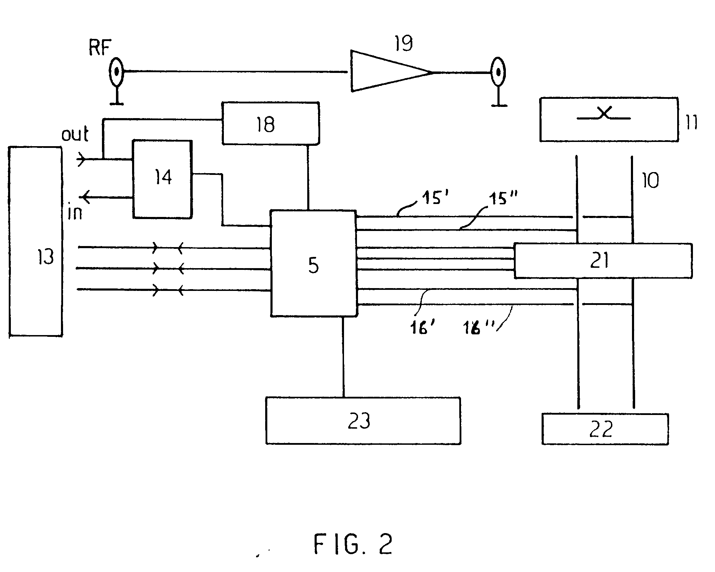

Fig. 2 shows a block diagram of a preferred embodiment of the interface device 1 of Fig. 1. In this diagram the control unit 5, according to the transmitted input/output signals on an usual bus comprising pins for the data exchange from the controller to the keyboard, the synchronism, the data transmission from the terminal, the voltage supply (which are associated to the mobile telephone and are generally denoted by 13), is suited to modify the state of a switch 21 which is constantly interfaced with the telephone line of the fixed plant 12 through the telephone 22, and can connect said telephone line of the fixed plant 12 with the physical line 10 linked to the telephone exchange 11 of the fixed telephone network, or it can connect the telephone line of the fixed plant 12 with the output terminals of the cellular phone (13).

The bus lines 15', 15" of the control unit 5 have the task of detecting the engagement condition of the internal line towards the telephone exchange, whereas the lines 16', 16" have the task of detecting the engagement condition of the (domestic) fixed plant on a physical line.

As will be explained afterwards, the protocols designed for controlling the incoming or the outgoing telephone calls, and for the appropriate management of the fixed plant on the physical line, will be managed according to the result of the detection of the engagement conditions.

In Fig. 2 there is also shown the bell detector 18 of the cellular phone with the relative low frequency sound detector 14, the external antenna 19, and a display 23 for visualizing and monitoring the condition and the operation of the interface device 1. On said display 23 it is possible to visualize the radio-frequency signal level, the presence of the supply, the detection of the condition of the fixed line or of the cellular phone, short circuits or localized interruptions in the fixed line, etc.

Such an embodiment of the invention allows to immediately identify the incoming telephone call, by judging whether it comes from a cellular phone or from the telephone exchange of the fixed line, if the latter is active.

Several realizations of the connection for interfacing the cellular phone to the interface device 1 are possible: for instance, this may occur through electric contacts, through optical coupling, acoustical coupling or radio waves (or combinations thereof).

In particular the interfacing performed by radio waves makes use of the standard features of a radio link by the point of view of operative modulation and frequency. From the acoustical point of view, a typical device which could be validly used is one providing the coupling between the loudspeaker of the cellular phone and the microphone of the interface device 1, and the coupling between the microphone of the cellular phone with a loudspeaker of the interface device, using in this way an automatic conversation syncronization.

Leaving out further details on the implementation of the components, which are obvious for those skilled in the field of telephone communications, in this context the more specific functional details will be put in evidence, which obviously confer to the invention its originality.

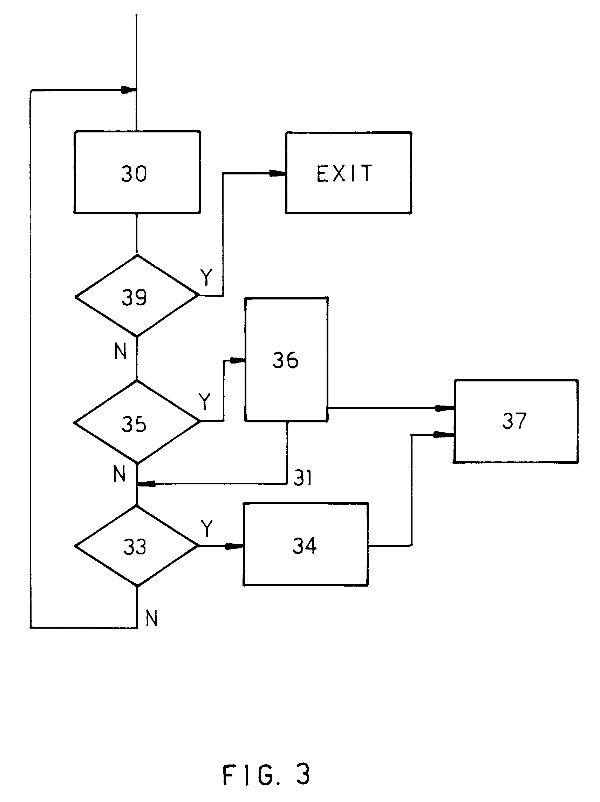

A first schematic representation of the processes involved in the interfacing provided by the device according to the invention, is given in Fig. 3.

The schematic representation of this drawing, which will be examined in detail in the following, puts in evidence a sequence of steps which is customary for the operation of the device; this sequence comprises:
30 - a test of the internal plant, that is on the local physical line, of the radio-frequency signal, of the local line, and on the supply source; actually, a test is performed on the plant, both upstream and downstream of the device according to the invention, and apart from the occurrence of specific events (energy supply problems, absence of the fixed telephone network line connected to the telephone exchange, disconnections on the internal plant, etc... which are only particular examples of events which disable the proper operation), it is important to consider this first function which forms a gateway for further functions associated to the interfacing itself;
39 - in presence of a block event, a message associated to the type of event is visualized on the display during exit;
35 - in case the local internal line can be operated, the default condition provides that the supervisory program 36 manages the engagement of this line for a possible incoming or outgoing call; this program 36, as outlined in the following description, supplies also in a subordinate way a protocol which controls the access of incoming or outgoing telephone calls on the radio terminal, as shown by the path 31;
33 - if the presence of the radio terminal is ascertained, a plurality of specific functions associated to the block 34 are activated, said block comprising: management of the input/output at low frequency, management of a possible outgoing or incoming telephone call, visualization of the engaged terminal, dialling of numbers for outgoing calls, activation of the amplification produced by the existing additional antenna;
37 - realization of the interfacing between the cellular phone service and the fixed plant telephone service on a physical line, this being accomplished through a loop, which according to the state of the circuit:
   - changes over the connection of the internal line of the fixed plant, to the local line connected to the telephone exchange, or to the radio terminal(s);
   - controls the radio-frequency signal;
   - manages the simultaneous engagement request of the internal line by means of voices provided ad hoc;
   - controls the efficiency of the internal line and of the telephone apparatuses connected thereto,
   - trascodes the engagement and selection criteria coming from the internal line.

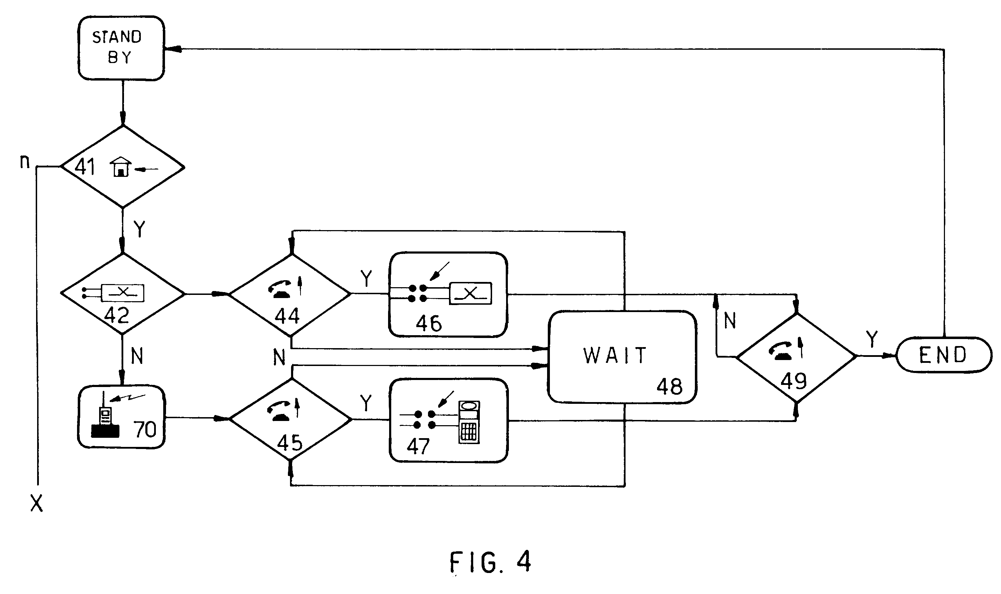

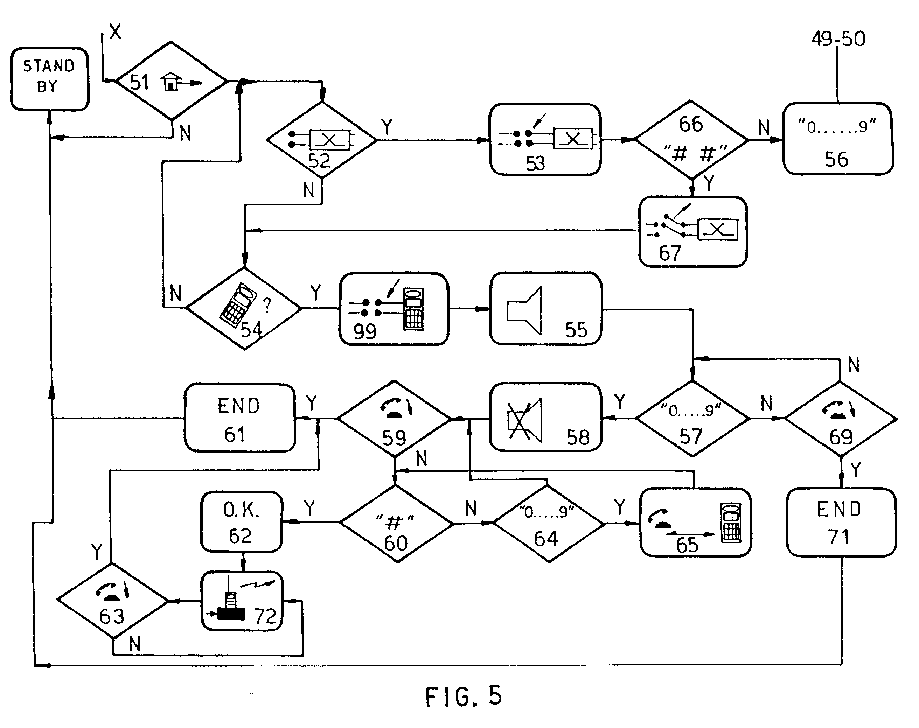

In figures 4 and 5 there are shown the functional diagrams obtained according to the active protocol semantics, in the presence of an incoming telephone call 41, and at the time of an outgoing telephone call 51 respectively.

They outline the details of the functional blocks already shown in Fig. 3. In particular, Fig. 4 is a deeper illustration of the incoming call management protocol, for an incoming call on the fixed telephone network line or a radio terminal, corresponding to the steps 33, 34, 35, 36, 37 of Fig. 3.

On the other hand, Fig. 5, which also relates to steps 33, 34, 35, 36, 37 of Fig. 3, illustrates in details the outgoing telephone call management protocol, both on a fixed telephone network line and on a radio terminal.

In case of an incoming telephone call 41, the same comes from the fixed telephone network line 42 or otherwise it certainly comes from the radio terminal 70; in both cases the interface device management protocol provides for a test step 44, 45 respectively, which preliminarly verify if the fixed plant internal line is free.

Actually, the engagement condition would lead to a waiting condition 48 both for a fixed telephone network line call and for a telephone call from a radio terminal, and consequently to the sending of a standard voice to the calling subscriber and of a notice of incoming call to the called subscriber.

On the other hand, if following the determination of the engagement condition of the internal line the latter is free, then:
- in step 44 the internal line of the fixed plant is engaged by activation of a flag which announces the engagement condition of the line itself; this line is connected to the fixed telephone network line wherein a loop 49 is activated which holds the line engaged till the end of the conversation;
- in step 45, by a telephone bell a specific sound signal is activated which is different from the one usually associated to a telephone call coming from the fixed telephone network line, and the internal line of the fixed plant is engaged, by the activation of a flag which announces the condition of engagement of the line itself; at 47 this line is connected to the line of the radio terminal, wherefrom a loop 49 is activated which holds the line engaged till the end of the conversation.

If the test 41 has a negative outcome, since there is no incoming telephone call, the outgoing traffic may be activated and, therefore, we enter the protocol schematically shown in Fig. 5, which comprises an initial test 51 which is cyclically carried out on request of the engagement condition of the internal line.

Since, the default condition is the engagement of the internal line sent towards the fixed telephone network line, at 52 a first test is carried out about the availability of the latter, and if it is available the connection is performed at 53 with the internal line itself.

The protocol which has been introduced to carry out the management of the interface device according to the present invention provides that, once the connection has been established, that is, downstream of the block 53, and in presence of the typical acoustic signal of the telephone exchange associated to the fixed telephone network line, the output could also be deviated towards a radio terminal, dialling on the telephone apparatus of the fixed internal line, the pre-programmed dedicated keys which in the figure have been represented by a double "number sign". In other words, if following the connection of the internal line of the fixed plant and the fixed telephone network line, no instruction is given for deviation on a radio terminal, the fixed telephone network line connection will persist and the functional block 56 provides for the selection, i.e. the routing of the dialled number from the telephone exchange which determines the validity and completeness of the dialled number (actually, from this functional block 56 the conversation itself is started, as already explained in Fig. 4, with the activation of the engagement loop and with the end loop test 49 at the end of the conversation). If however through the test 66 the key sequence for the activation of the radio-frequency terminal is dialled, at 67 the internal line is disconnected from the fixed telephone network line, thereby entering a cycle which determines the effective availability of the radio terminal by the exit test 54.

The non-availability of the radio-frequency terminal would require the repetition of the operative sequence 52,53,66 and 67, which has been already illustrated. On the other hand, the presence 99 of the radio-frequency terminal is firstly announced by sending at 55 a specific tone on the internal line which will announce to the calling user the availability of the radio-frequency terminal, said tone being obviously different from that which is usually sent by the telephone exchange connected to the fixed telephone network line.

This tone indicating the presence of the radio-frequency terminal will persist on the telephone apparatus of the fixed line used for the telephone call, until in step 58 the numeric selection is started passing through the decision step 57 which detects the keying in of numeric data. Alternatively, this decision step would arrange for the hang up condition 69 and the return to the stand-by condition performed at step 71 by the end-of-conversation command, wherein the tone indicating the availability of the radio-frequency terminal will end at the same time; upstream of the disconnection 71, in order to operate the interruption of the radio-frequency terminal from the internal telephone apparatus, the management protocol of the interface device performs a polling test cycle 69 in order to control the requests of the calling user.

If, instead, the numeric selection is performed after the end of the free tone sending 58 indicating that the radio-frequency terminal is free, a specific procedure is started which judges about the termination and completeness of the selected number.

Actually, it is known that in case of a telephone call on a fixed telephone network line, the telephone exchange itself can determine about the completeness, the validity and the termination of the dialled telephone number, whereas, in case of a cellular phone it is always necessary that the calling user, once he has dialled all the digits forming the telephone number, sends a further confirmation command for the operated dialling.

In order to overcome this difference in the called number setting and selection, the compatibility between the fixed telephone apparatus and the cellular phone is managed in the device according to the invention, using the function (non-numeric) keys which are usually present on the keyboard of a fixed line telephone apparatus (for instance the asterisk and the number sign).

In particular in Fig. 5 there is emphasized how, after the beginning of the selection (dialling) 57 and the end of the availability tone transmission of the radio-frequency terminal 58, it is cyclically interrogated whether an hang up command 59 is present or whether the characters used for the termination 60 of the numeric dialling and for the sending 62 of the dialled number, have been keyed in (in our case the key with the number sign).

The hang up command 59-61 may be used from the calling user in the course of the dialling on the keyboard of the telephone apparatus associated to the internal line of the fixed plant, of the digits making up the telephone number, if he/she realizes that some digits have been dialled erroneously. This actually corresponds to the situation according to which on a cellular phone, after the dialling of some digits, the telephone call is cancelled by the key used for this purpose: in this condition, even if the numbers which have been typed in continue to appear on the display, the telephone call is actually cancelled and a stand-by condition is re-established. Therefore, summing up, at any moment of the dialling operation it is possible to:
- either continue with the dialling operation typing in a digit in step 64 which is coded and transduced in step 65 to the radio-frequency terminal;
- or terminate, in step 60, the dialling operation by using a key arranged for this purpose (in the present case, for instance, the number sign key), and send, in step 62, the number for the connection and the conversation 72 (obviously, in order to stop the conversation, the usual hang up command 63 is provided);
- or suspend the dialling through the path 64-59-61 for any contingent necessity of the calling user, as specified.

The utility and the consequently possible wide spread of such an interface device in the immediate future is evident, due to the fact that the wireless telephony has a development by far greater than the telephony via cable.

The described device is an absolutely necessary means both for the optimum use of the signal transmission in the mobile telephony, and for preventing the fixed plants on a physical line from becoming prematurely obsolete.

## Claims

1. A device for interfacing the cellular phone service and the telephone service associated to a fixed plant on a fixed telephone network line, characterized in that it is provided with hardware and software means in order to transfer on the fixed plant of the local physical line, the active telephone communication which is established on the mobile telephone network, in such a way that in the presence of an incoming call, both from a fixed physical line coming from the telephone exchange or from the mobile telephone network through at least a cellular phone, according to the state of the fixed plant on physical line concerned, provides for the management of the engagement of the latter if this line is free, or if the latter is engaged, for the waiting or the insertion on the line - through the hung up of the conversation with the called user -according to a dedicated service protocol, and further characterized in that with respect to said fixed plant on a local line, it is provided with a switching function for routing the outgoing telephone call either to the telephone exchange, through the fixed telephone network line, or to the mobile telephone network, through the interfaced cellular phone.

2. A device for interfacing the cellular phone service and the telephone service associated to a fixed plant on a fixed telephone network line, according to claim 1, characterized in that the presence of an incoming call, transmitted on a physical line coming from the telephone exchange, or from the mobile telephony network through at least a cellular phone, provides for the following operations according to the condition of the internal fixed plant on physical line concerned by this call:
- if the fixed plant internal line is free, the insertion of the telephone call in the circuit associated to this physical line and to all extensions and complementary devices thereof;
- if the fixed plant internal line is engaged because the user is already engaged in a conversation with a mobile telephone, the sending of a message to the calling user informing him about the fact that the called user is engaged in another conversation and has been informed, and that he may wait, if he wishes to speak with him immediately; wherein the called user is informed about this further communication request, which he may or may not follow by hanging up or continuing the conversation on the mobile telephone apparatus, and wherein the line becomes free in any case at the time the active conversation is abandoned; and
- if the fixed plant internal line is engaged because the user is already engaged in a conversation with a communication established on the physical line of the telephone exchange there occurs a telephone call on the cellular phone, the telephone ring being perceived in the environment of the cellular phone, or if there occurs an announcement informing about that telephone call, the sending of a message to the calling user informing him about the fact that the called user is engaged in another conversation, that the latter has been informed and that he/she may wait if he/she wants to speak to him /her immediately, wherein the called user is informed about a further communication request, which he may or may not follow by hanging up or by continuing the conversation on the fixed plant telephone line, on the local line, wherein the line becomes free in any case at the time the active communication is abandoned.

3. A device for interfacing the cellular phone service and the telephone service associated to a fixed plant on a fixed telephone network line, according to claim 1, characterized in that the user is able to distinguish immediately if an incoming telephone call comes from the mobile telephone network or from the line fixed telephone network.

4. A device for interfacing the cellular phone service and the telephone service associated to a fixed plant on a fixed telephone network line, according to claims 1 to 3, characterized in that it comprises a control unit (5), which according to the received input/output signals enables the change of state of a switch (21), which is interfaced with the telephone local line of the fixed plant (12) and can either connect said telephone line of the fixed plant (12) with the physical line (10) coming from the telephone exchange (11) of the fixed telephone network, or connect the internal telephone line of the fixed plant (12), with the input/output terminals of the cellular phone (13).

5. A device for interfacing the cellular phone service and the telephone service associated to a fixed plant on a fixed telephone network line, according to claim 1, characterized in that in case of an incoming call, and after the valuation about the state of the fixed plant internal line, if the latter is free:
- and if the call comes from the fixed telephone network line, the internal line of the fixed plant is engaged by the activation of a flag which signals the engagement state of the line itself, and this fixed plant internal line is connected to the local physical line of the fixed line telephone network and a loop is activated to maintain the line engaged till the end of the conversation,
- and if the telephone call comes from a radio terminal, a specific acoustic signalling is activated by a call generator, which is different from that usually associated to a call coming from a fixed telephone network line, and the internal line of the fixed plant will be engaged by the activation of a flag which signals that the line is engaged; the fixed plant internal line being connected to the line of the radio terminal wherefrom a loop is activated which holds the line engaged till the end of the conversation.

6. A device for interfacing the cellular phone service and the telephone service associated to a fixed plant on a fixed telephone network line, according to claims 1 and 5, characterized in that in case of an outgoing call, the default condition provides for addressing the engagement of the fixed plant internal line to the fixed telephone network line, and a first test about the availability of this line is performed, and if it is available, the connection with the internal local line itself is established.

7. A device for interfacing the cellular phone service and the telephone service associated to a fixed plant on a fixed telephone network line, according to claim 1 and 6, characterized in that in case of an outgoing telephone call, after the connection with the fixed telephone network line, and already in presence of the acoustic signal which is typical of the telephone exchange associated to the fixed telephone network line, the output may be anyway deviated towards a radio terminal by typing the dedicated pre-programmed keys on the telephone apparatus of the fixed plant internal line to thereby disconnect the internal line from the fixed telephone network line.

8. A device for interfacing the cellular phone service and the telephone service associated to a fixed plant on a fixed telephone network line according to the preceding claims characterized in that for carrying out the outgoing call by means of the radio-frequency terminal, the presence of this latter is firstly signalled by sending a specific tone on the internal line which will announce to the calling user the availability of the radio-frequency terminal, said tone being obviously different from that which is usually sent by the telephone exchange connected to the fixed telephone network line, this tone which indicates the presence of the radio-frequency terminal persisting on the telephone apparatus of the internal line fixed plant used for the telephone call, until the numeric selection is started, alternatively, operating the hang up condition and the return to the stand-by condition by means of the end-of-conversation command.

9. A device for interfacing the cellular phone service and the telephone service associated to a fixed plant on a fixed telephone network line, according to claim 1 and 5, characterized in that in case of an outgoing call performed by a radio-frequency terminal, a specific procedure is executed which judges about the termination and the completeness of the selected number, which cyclically interrogates if an hang-up command has been sent through the telephone of the fixed plant, or if the non-numeric characters associated to the termination of the numeric dialling and responsible for the sending of the dialled number, have been keyed in.

10. A device for interfacing the cellular phone service and the telephone service associated to a fixed plant on a fixed telephone network line, according to claims 1 and 4, characterized in that the connection for the intercommunication between the cellular phone and the interface device (1) is performed using electric coupling means, and/or optical coupling means, and/or acoustical coupling means, and/or coupling means via radio waves.
